# EUROPEAN PATENT APPLICATION

(11) **EP 4 596 640 A1**
(43) Date of publication of application: **06.08.2025**
(21) Application number: 23871327.5
(22) Date of filing: 21.06.2023
(51) Int. Cl.: C09D 11/322, B41M 5/00, B41J 2/01

(54) **AQUEOUS INKJET INK COMPOSITION AND PRINTED MATTER**

(30) Priority: 26.09.2022 JP 2022152550
(71) Applicant: Sakata INX Corporation, Osaka-shi, Osaka 550-0002 (JP)
(72) Inventor: UEDA, Eri, Osaka-shi, Osaka 550-0002 (JP); SANO, Takaaki, Osaka-shi, Osaka 550-0002 (JP); MORIYASU, Kazuki, Osaka-shi, Osaka 550-0002 (JP); MAEDA, Hirohito, Osaka-shi, Osaka 550-0002 (JP)
(74) Representative: Cabinet Beau de Loménie
(86) International application number: PCT/JP2023/022949
(87) International publication number: WO 2024/070082

(57) **Abstract**

Provided is an aqueous inkjet ink composition comprising a pigment, an alkali-soluble resin, a resin emulsion, a surfactant, a water-soluble solvent, and water. The alkali-soluble resin has an acid value of 100-250 mgKOH/g. The surfactant contains an acetylene-based surfactant and a nonionic surfactant, and the nonionic surfactant includes one or more types selected from the group consisting of polyoxymethylene alkyl ethers and alkoxy alcohols. The content of the resin component of the resin emulsion in the aqueous inkjet ink composition is 0.5-10 mass%. The static surface tension is 27-33 mN/m, and the dynamic surface tension if 33-39 mN/m. The aqueous inkjet ink composition exhibits storage stability, discharge stability, continuous discharge properties, and scratch resistance.

## Description

### TECHNICAL FIELD

The present invention relates to an aqueous inkjet ink composition and a printed matter.

### BACKGROUND ART

An inkjet printing/recording method is a printing/recording method in which droplets of an aqueous inkjet ink composition are directly ejected from very fine nozzles and attached onto a printing/recording base material to obtain letters and images.

As such an aqueous inkjet ink composition, for example, a composition containing a pigment, an alkali-soluble resin (resin for pigment dispersion), a resin emulsion, a surfactant, a water-soluble solvent, water and the like is known (Patent Documents 1 to 4). These Patent Documents disclose aqueous inkjet ink compositions having good storage stability and ejection stability. As an aqueous inkjet ink composition, those having a specific static surface tension and a dynamic surface tension are also known (Patent Documents 5 to 8).

### PRIOR ART DOCUMENTS

### PATENT DOCUMENTS

Patent Document 1: JP-A-2020-56018
Patent Document 2: JP-A-2019-1955
Patent Document 3: JP-A-2018-104582
Patent Document 4: JP-A-2015-137319
Patent Document 5: JP-A-2004-115649
Patent Document 6: JP-A-2017-197709
Patent Document 7: JP-A-2017-132973
Patent Document 8: WO-A-2018/207636

### SUMMARY OF THE INVENTION

### PROBLEMS TO BE SOLVED BY THE INVENTION

As described above, aqueous inkjet ink compositions are required to have storage stability and ejection stability, and there is room for improvement in continuous ejection property and rubfastness.

The present invention has been made in view of the above circumstances, and an object of the present invention is to provide an aqueous inkjet ink composition excellent in storage stability, ejection stability, continuous ejection property, and rubfastness.

### MEANS FOR SOLVING THE PROBLEMS

That is, the present invention relates to an aqueous inkjet ink composition, including: a pigment, an alkali-soluble resin, a resin emulsion, a surfactant, a water-soluble solvent, and water, wherein the alkali-soluble resin has an acid value of 100 mgKOH/g or more and 250 mgKOH/g or less, the surfactant contains an acetylene surfactant and a nonionic surfactant, the nonionic surfactant contains one or more selected from the group consisting of a polyoxyethylene alkyl ether and an alkoxy alcohol, a percentage of a resin component of the resin emulsion is 0.5% by mass or more and 10% by mass or less in the aqueous inkjet ink composition, a static surface tension measured at 23°C is 27 mN/m or more and 33 mN/m or less, and a dynamic surface tension measured at 23°C by maximum bubble pressure method is 33 mN/m or more and 39 mN/m or less at a life time of 10 msec.

The present invention also relates to a printed matter obtained by performing printing using the aqueous inkjet ink composition.

### EFFECT OF THE INVENTION

Though the details of the mechanism of action of the effect in the aqueous inkjet ink composition of the present invention are partially unknown, they are presumed as follows. However, the present invention is not construed as being limited to this mechanism of action.

In the aqueous inkjet ink composition according to the present invention, an acetylene surfactant and a nonionic surfactant which is one or more selected from the group consisting of a polyoxyethylene alkyl ether and an alkoxy alcohol are used in combination as a surfactant to adjust the static surface tension and the dynamic surface tension to appropriate ranges, thereby the refillable property of the ink in the ink flow path is improved, and thus the ejection stability and the continuous ejection property in ink jet printing are improved. Also, an alkali-soluble resin having an acid value in a specific range and a specific amount of a resin emulsion are used in combination to stabilize the dispersion of the pigment in the ink and improve the strength of the ink coating film, thereby the storage stability and rubfastness can be improved. Therefore, the aqueous inkjet ink composition of the present invention is excellent in balance of storage stability, ejection stability, continuous ejection property, and rubfastness.

### MODE FOR CARRYING OUT THE INVENTION

The aqueous inkjet ink composition of the present invention contains a pigment, an alkali-soluble resin, a resin emulsion, a surfactant, a water-soluble solvent, and water.

### <Pigment>

As the pigment of the present invention, an organic pigment or an inorganic pigment used in an inkjet ink composition can be used without particular limitation. Examples of the organic pigment include a dye lake pigment, an azo pigment, a benzimidazolone pigment, a phthalocyanine pigment, a quinacridone pigment, an anthraquinone pigment, a dioxazine pigment, an indigo pigment, a thioindico pigment, a perylene pigment, a perinone pigment, a diketopyrrolopyrrole pigment, an isoindolinone pigment, a nitro pigment, a nitrosobased pigment, a flavanthrone pigment, a quinophthalone pigment, a pyranthrone pigment, and an indanthrone pigment. Examples of the inorganic pigment include carbon black, titanium oxide, zinc oxide, red iron oxide, graphite, black iron oxide, chrome oxide green, and aluminum hydroxide. The pigment can be subjected to a surface treatment using a known surface treatment agent. The pigment can be used singly or in combination of two or more types thereof.

Specific examples of the pigment for each typical hue include the following.

Examples of yellow pigments include C.I. Pigment Yellows 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, and 213.

Examples of magenta pigments include C.I. Pigment Reds 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, and 270, and C.I. Pigment Violet 19.

Examples of cyan pigments include C.I. Pigment Blues 1, 2, 3, 15, 15:1, 15:2, 15:3, 15:4, 15:6, 16, 18, 22, 27, 29, and 60.

Examples of black pigments include carbon black (C.I. Pigment Black 7).

Examples of white pigments include titanium oxide and aluminum oxide, and the white pigments can be subjected to a surface treatment using various materials such as alumina and silica.

### <Alkali-soluble resin>

The alkali-soluble resin of the present invention is an alkali-soluble resin that can be used for pigment dispersion of normal inks and paints or as a binder, can be dissolved in an aqueous medium in the presence of a basic compound, and has an acid value of 100 mgKOH/g or more and 250 mgKOH/g or less. The alkali-soluble resin is preferably a resin containing one or more types of anionic groups such as a carboxyl group, a sulfonic acid group, and a phosphonic acid group (-P(=O)(OH₂)).

The alkali-soluble resin preferably further has a hydrophobic moiety for improving the adsorption mainly on the pigment in the molecule. Examples of the hydrophobic moiety introduced into the molecule include hydrophobic groups such as a long-chain alkyl group and an alicyclic or aromatic cyclic hydrocarbon group.

The acid value of the alkali-soluble resin is preferably 120 mg KOH/g or more, more preferably 140 mg KOH/g or more from the viewpoint of improving the storage stability and continuous ejection property and increasing the solubility in an aqueous medium. The acid value of the alkali-soluble resin is preferably 240 mg KOH/g or less, more preferably 230 mg KOH/g or less from the viewpoint of improving the storage stability and rubfastness, and improving the water resistance of a printed matter. When the acid value is less than 100 mgKOH/g, the solubility of the resin is decreased, and thus the storage stability and continuous ejection property may be decreased. When the acid value is more than 250 mgKOH/g, the hydrophilicity becomes too high, and thus the storage stability and rubfastness may be decreased. That is, the acid value of the alkali-soluble resin is preferably 120 mgKOH/g or more and 240 mgKOH/g or less, more preferably 140 mgKOH/g or more and 230 mgKOH/g or less from the viewpoint of improving the storage stability and continuous ejection property and increasing the solubility in an aqueous medium, and from the viewpoint of improving the storage stability and rubfastness and improving the water resistance of a printed matter. The acid value is a theoretical acid value of the mg number of potassium hydroxide theoretically required to neutralize 1 g of the alkali-soluble resin arithmetically determined based on the composition of the monomer used for synthesizing the alkali-soluble resin.

The glass transition temperature of the alkali-soluble resin is preferably 0°C or more, more preferably 10°C or more from the viewpoint of improving the blocking resistance of a printed matter. The glass transition temperature of the alkali-soluble resin is preferably 100°C or less, more preferably 80°C or less from the viewpoint of improving the folding resistance of a printed matter. That is, the glass transition temperature of the alkali-soluble resin is preferably 0°C or more and 100°C or less, more preferably 10°C or more and 80°C or less from the viewpoint of improving the blocking resistance of a printed matter and the folding resistance of a printed matter.

The glass transition (Tg) temperature of the alkali-soluble resin is a theoretical glass transition temperature determined by the following Wood equation when the alkali-soluble resin is an acrylic copolymer resin. 1/Tg = W1/Tg1 + W2/Tg2 + W3/Tg3 + ····· + Wx/Tgx [where, Tg1 to Tgx represent the glass transition temperature of homopolymer of each of the monomers 1, 2, 3 ··· x that constitute the alkali-soluble resin, W1 to Wx represent the polymerization fraction of each of the monomers 1, 2, 3 ··· x, and Tg represents the theoretical glass transition temperature. Provided that, the glass transition temperature in the Wood equation is the absolute temperature.]

The glass transition temperature of the alkali-soluble resin is an actual glass transition temperature determined by thermal analysis when the alkali-soluble resin is a resin other than the acrylic copolymer resin. As the method of thermal analysis, as an example, the glass transition temperature can be measured in conformity with JIS K7121 (Testing Methods for Transition Temperatures of Plastics) using Pyris1 DSC manufactured by PerkinElmer Co., Ltd. under the conditions of a rate of temperature rise of 20°C/min and a nitrogen gas flow rate of 20 ml/min.

The weight average molecular weight (Mw) of the alkali-soluble resin is preferably 5,000 or more, more preferably 10,000 or more from the viewpoint of improving the water resistance of a printed matter. The weight average molecular weight of the alkali-soluble resin is preferably 100,000 or less, more preferably 50,000 or less from the viewpoint of increasing the solubility in an aqueous medium.

The weight average molecular weight can be measured by the gel permeation chromatography (GPC). As an example, the weight average molecular weight in terms of polystyrene can be determined by performing chromatography using Water 2690 (manufactured by Waters Corporation) as a GPC instrument, and PLgel, 5 µ, MIXED-D (manufactured by Polymer Laboratories Inc.) as a column under the conditions of a tetrahydrofuran as a developing solvent, a column temperature of 25°C, a flow rate of 1 ml/min, an RI detector, a sample injection concentration of 10 mg/ml, and an injection volume of 100 µl.

Examples of the alkali-soluble resin include an acrylic copolymer resin, a maleic acid copolymer resin, a polyester resin obtained by condensation polymerization reaction, and a polyurethane resin. Materials for synthesizing such alkali-soluble resins are disclosed, for example, in JP-A-2000-94825, and it is possible to use an acrylic copolymer resin, a maleic acid copolymer resin, a polyester resin, a polyurethane resin and the like that are obtained using the materials described in the publication. Further, it is also possible to use resins obtained using materials other than these materials. The alkali-soluble resins can be used singly or in combination of two or more types thereof.

As the acrylic copolymer resin, for example, one obtained by polymerizing a mixture of other monomers copolymerizable with an anionic group-containing monomer in a solvent in the presence of an ordinary radical generator (for example, benzoyl peroxide, tert-butyl peroxybenzoate, or azobisisobutyronitrile) can be used.

Examples of the anionic group-containing monomer include a monomer having at least one type of anionic groups selected from the group consisting of a carboxyl group, a sulfonic acid group, and a phosphonic acid group, and among these, a monomer having a carboxyl group is particularly preferable.

Examples of the monomer having a carboxyl group include acrylic acid, methacrylic acid, crotonic acid, itaconic acid, maleic acid, fumaric acid, 2-carboxyethyl (meth)acrylate, 2-carboxypropyl (meth)acrylate, maleic anhydride, fumaric anhydride, and maleic acid half ester. Examples of the monomer having a sulfonic acid group include sulfoethyl methacrylate. Examples of the monomer having a phosphonic acid group include phosphonoethyl methacrylate.

The other monomers copolymerizable with an anionic group-containing monomer preferably include a hydrophobic group-containing monomer from the viewpoint of improving the adsorption on a pigment.

Examples of the hydrophobic group-containing monomer include, as a monomer having a long-chain alkyl group, alkyl esters having 8 or more carbon atoms of a radically polymerizable unsaturated carboxylic acid such as (meth)acrylic acid (for example, 2-ethylhexyl (meth)acrylate, octyl (meth)acrylate, lauryl (meth)acrylate, stearyl (meth)acrylate, 2-hydroxystearyl (meth)acrylate and the like), alkyl vinyl ethers having 8 or more carbon atoms (for example, dodecyl vinyl ether and the like), and vinyl esters of a fatty acid having 8 or more carbon atoms (for example, vinyl 2-ethylhexanoate, vinyl laurate, vinyl stearate and the like) ; as a monomer having an alicyclic hydrocarbon group, cyclohexyl (meth)acrylate and the like; and as a monomer having an aromatic hydrocarbon group, styrene monomers such as benzyl (meth)acrylate, styrene, α-methylstyrene, and vinyltoluene. The hydrophobic group-containing monomers can be used singly or in combination of two or more types thereof.

The other monomers copolymerizable with an anionic group-containing monomer can include a hydrophilic group-containing monomer from the viewpoint of suppressing aggregation of the alkali-soluble resin in an aqueous medium.

Examples of the hydrophilic group-containing monomer include, as a monomer having a (poly)oxyalkylene chain, esterified products of a (poly)alkylene glycol in which one terminal is capped with alkyl such as methoxy polyethylene glycol, methoxy polyethylene polypropylene glycol, ethoxy polyethylene glycol, ethoxy polyethylene polypropylene glycol, propoxy polyethylene glycol, and propoxy polyethylene polypropylene glycol, and a radically polymerizable unsaturated carboxylic acid such as (meth)acrylic acid, and ethylene oxide adducts and/or propylene oxide adducts of a radically polymerizable unsaturated carboxylic acid such as (meth)acrylic acid; as a basic group-containing monomer, vinylpyrrolidones such as 1-vinyl-2-pyrrolidone and 1-vinyl-3-pyrrolidone, vinylpyridines such as 2-vinylpyridine, 4-vinylpyridine, 5-methyl-2-vinylpyridine, and 5-ethyl-2-vinylpyridine, vinyl imidazoles such as 1-vinyl imidazole and 1-vinyl-2-methylimidazole, vinylpiperidines such as 3-vinylpiperidine and N-methyl-3-vinylpiperidine, nitrogen-containing derivatives of (meth)acrylic acid such as dimethylaminoethyl (meth)acrylate, diethylaminoethyl (meth)acrylate, tert-butylaminoethyl (meth)acrylate, (meth)acrylamide, N-methylol (meth)acrylamide, N-butoxymethyl (meth)acrylamide, N-methoxy (meth)acrylamide, N-ethoxy (meth)acrylamide, N-dimethylacrylamide, and N-propylacrylamide; as a monomer having a hydroxyl group, hydroxyalkyl esters of (meth) acrylic acid such as hydroxyethyl (meth)acrylate and hydroxypropyl (meth)acrylate; and as a monomer having an epoxy group, glycidyl (meth)acrylate. The hydrophilic group-containing monomers can be used singly or in combination of two or more types thereof.

Examples of the hydrophobic group-containing monomer and other copolymerizable monomers other than hydrophilic group-containing monomers include alkyl esters having less than 8 carbon atoms of (meth)acrylic acid, such as methyl (meth)acrylate, ethyl (meth)acrylate, propyl (meth)acrylate, isopropyl (meth)acrylate, butyl (meth)acrylate, and hexyl (meth)acrylate. The hydrophobic group-containing monomers and other copolymerizable monomers other than hydrophilic group-containing monomers can be used singly or in combination of two or more types thereof.

### <Resin emulsion>

The aqueous inkjet ink composition of the present invention preferably contains a resin emulsion from the viewpoint of improving the rubfastness, the drying property of the coating film, and the cissing resistance. As the resin emulsion, known resin emulsions used in aqueous inkjet ink compositions can be used. Examples of the resin emulsion include an acrylic resin emulsion, a styrene-acrylic resin emulsion, a polyester resin emulsion, a polyurethane resin emulsion, a polyvinyl acetate resin emulsion, a polyvinyl chloride resin emulsion, a polybutadiene resin emulsion, and a polyolefin resin emulsion. In the resin emulsion, the glass transition temperature of the resin is preferably 20°C or less from the viewpoint of improving the drying property of the coating film of a printed matter and the adhesion to the base material. For the glass transition temperature, the catalog value of the manufacturer is used as a reference. In a case where the catalog value is not available, the glass transition temperature is determined by differential scanning calorimetry (DSC). The glass transition temperature is usually calculated by the midpoint of the temperature range in which the glass transition occurs. The resin emulsions can be used singly or in combination of two or more types thereof.

### <Surfactant>

The surfactant of the present invention contains an acetylene surfactant and a nonionic surfactant, and the nonionic surfactant contains one or more selected from the group consisting of a polyoxyethylene alkyl ether and an alkoxy alcohol.

Examples of the acetylene surfactant include trade names: "SURFYNOL 104E", "SURFYNOL 104H", "SURFYNOL 104A", "SURFYNOL 104BC", "SURFYNOL 104DPM", "SURFYNOL 104PA", "SURFYNOL 104PG-50", "SURFYNOL 420", "SURFYNOL 440", "SURFYNOL 465", "SURFYNOL 485", "OLFIN E1004", "OLFIN E1010", and "OLFIN E1020" (manufactured by Nissin Chemical co., ltd.). The acetylene surfactants can be used singly or in combination of two or more types thereof.

From the viewpoint of the compatibility with the ink, the polyoxyethylene alkyl ether preferably has an HLB value of 7 or more, more preferably has an HLB value of 8 or more, and further preferably has an HLB value of 9 or more. From the viewpoint of the leveling property of the ink droplets, the polyoxyethylene alkyl ether preferably has an HLB value of less than 15, more preferably has an HLB value of 14 or less, and further preferably has an HLB value of 13 or less. That is, from the viewpoint of the compatibility with the ink and from the viewpoint of the leveling property of the ink droplets, the polyoxyethylene alkyl ether preferably has an HLB value of 7 or more and less than 15, more preferably has an HLB value of 8 or more and 14 or less, and further preferably has an HLB value of 9 or more and 13 or less. The HLB value is an index indicating the degree of hydrophilicity and lipophilicity of a surfactant and is calculated by the Griffin's method. The HLB value indicates that the lipophilicity is higher as the HLB value is smaller and the hydrophilicity is higher as the HLB value is larger. The polyoxyethylene alkyl ether can be used singly or in combination of two or more types thereof.

Though the number of carbon atoms in the alkyl group and the average number of moles of ethyleneoxy groups added in the polyoxyethylene alkyl ether are not limited, for example, the number of carbon atoms is preferably about 11 or more and 15 or less, the number of carbon atoms is more preferably about 12 or more and 13 or less, the average number of moles of ethyleneoxy groups added is preferably about 3 or more and 15 or less, and the average number of moles of ethyleneoxy groups added is more preferably about 5 or more and 10 or less.

Examples of the polyoxyethylene alkyl ether include trade names: "EMULGEN 705", "EMULGEN 106", "EMULGEN 707", " EMULGEN 1108", "EMULGEN 1118S-70", " EMULGEN 1135S-70", and "EMULGEN 1150S-60" (manufactured by Kao Corporation); trade names: "ADEKA TOL LA-675B" and "ADEKA TOL LA-775" (manufactured by ADEKA CORPORATION) ; trade name: "TRITON (registered trademark) HW1000" (manufactured by Dow Chemical Company) ; and trade name: "SANNONIC SS70" (manufactured by Sanyo Chemical Industries, Ltd.) .

The alkoxy alcohol is an alcohol alkoxylate surfactant, and examples thereof include trade name: "DYNWET 800" (manufactured by BYK), and trade names: "ADEKA TOL LB-103", "ADEKA TOL LB-1220", and "ADEKA TOL LB-1520" (manufactured by ADEKA CORPORATION) . The alkoxy alcohols can be used singly or in combination of two or more types thereof.

### <Water-soluble solvent>

As the water-soluble solvent of the present invention, a known water-soluble solvent used in an aqueous inkjet ink composition can be used without particular limitation, and examples thereof include monoalcohols, polyhydric alcohols, lower alkyl ethers of polyhydric alcohols, nitrogen-containing compounds, ketones, ethers, and esters. The water-soluble solvents can be used singly or in combination of two or more kinds thereof.

Examples of the monoalcohols include methanol, ethanol, 1-propanol, 1-butanol, and 3-methoxy-3-methyl-1-butanol.

Examples of the polyhydric alcohols include ethylene glycol, propylene glycol, glycerin, diethylene glycol, 1,3-butylene glycol, 1,4-butylene glycol, 1,2-pentanediol, 1,5-pentanediol, neopentyl glycol, 1,2-hexanediol, 1,6-hexanediol, 1,2-cyclohexanediol, heptanediol, and 1,8-octanediol.

Examples of the lower alkyl ethers of polyhydric alcohols include ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, and dipropylene glycol mono-n-butyl ether.

Examples of the nitrogen-containing compounds include pyrrolidone and N-methyl-2-pyrrolidone.

Examples of the ketones include acetone, methyl ethyl ketone, methyl butyl ketone, methyl isobutyl ketone, diisopropyl ketone, cyclopentanone, and cyclohexanone.

Examples of the ethers include isopropyl ether, n-butyl ether, tetrahydrofuran, tetrahydropyran, and 1,4-dioxane.

Examples of the esters include propylene carbonate, methyl acetate, ethyl acetate, propyl acetate, isopropyl acetate, butyl acetate, isobutyl acetate, amyl acetate, ethyl lactate, ethyl butyrate, dibutyl phthalate, and dioctyl phthalate; and cyclic esters such as ε-caprolactone and ε-caprolactam.

The water-soluble solvent preferably contains at least one selected from the group consisting of monoalcohols, polyhydric alcohols, lower alkyl ethers of polyhydric alcohols, and nitrogen-containing compounds, and more preferably contains at least one selected from the group consisting of propylene glycol, glycerin, diethylene glycol, ethylene glycol monobutyl ether, diethylene glycol monobutyl ether, and 3-methoxy-3-methyl-1-butanol from the viewpoints of suppression of drying of the ink composition in the inkjet nozzle and ease of formation of an ink layer (film) on the base material.

### <Water>

The water of the present invention includes water as an aqueous medium contained in a pigment dispersion to be described later, water added to prepare the concentration of the aqueous inkjet ink composition of the present invention, and the like. Examples of the water include ion exchanged water, pure water, distilled water, and industrial water. The water can be used singly or in combination of two or more types thereof.

Hereinafter, the percentage of each component in the aqueous inkjet ink composition of the present invention will be described.

The percentage of the pigment in the aqueous inkjet ink composition of the present invention is preferably 1% by mass or more, more preferably 2% by mass or more from the viewpoint of improving the print density of a printed matter, and is preferably 10% by mass or less, more preferably 8% by mass or less from the viewpoint of improving the ejection stability. That is, the percentage of the pigment in the aqueous inkjet ink composition of the present invention is preferably 1% by mass or more and 10% by mass or less, more preferably 2% by mass or more and 8% by mass or less from the viewpoint of improving the printing density of a printed matter and the viewpoint of improving the ejection stability. However, when the pigment is a white pigment, the percentage of the white pigment in the aqueous inkjet ink composition of the present invention is preferably 4% by mass or more, more preferably 8% by mass or more, and is preferably 30% by mass or less, more preferably 20% by mass or less. That is, when the pigment is a white pigment, the percentage of the white pigment in the aqueous inkjet ink composition of the present invention is preferably 4% by mass or more and 30% by mass or less, more preferably 8% by mass or more and 20% by mass or less.

The content of the alkali-soluble resin is preferably 5 parts by mass or more, more preferably 15 parts by mass or more relative to 100 parts by mass of the pigment from the viewpoint of increasing the dispersibility of the pigment. The content of the alkali-soluble resin is preferably 100 parts by mass or less, more preferably 80 parts by mass or less, further preferably 60 parts by mass or less relative to 100 parts by mass of the pigment from the viewpoint of decreasing the viscosity of the aqueous inkjet composition. That is, the content of the alkali-soluble resin is preferably 5 parts by mass or more and 100 parts by mass or less, more preferably 15 parts by mass or more and 80 parts by mass or less, further preferably 15 parts by mass or more and 60 parts by mass or less relative to 100 parts by mass of the pigment from the viewpoint of increasing the dispersibility of the pigment and the viewpoint of decreasing the viscosity of the aqueous inkjet composition.

The percentage of a resin component (resin solid content) of the resin emulsion is 0.5% by mass or more and 10% by mass or less. The percentage of the resin component (resin solid content) of the resin emulsion is preferably 0.6% by mass or more, preferably 0.8% by mass or more from the viewpoint of improving print image quality and rubfastness, and is preferably 5% by mass or less, more preferably 2% by mass or less from the viewpoint of improving the ejection stability and the storage stability in the aqueous inkjet ink composition. That is, the percentage of the resin component (resin solid content) of the resin emulsion is preferably 0.6% by mass or more and 5% by mass or less, more preferably 0.8% by mass or more and 2% by mass or less from the viewpoint of improving the print image quality and the rubfastness, and the viewpoint of improving the ejection stability and the storage stability in the aqueous inkjet ink composition.

The percentage of the acetylene surfactant in the aqueous inkjet ink composition of the present invention is preferably 0.1% by mass or more, more preferably 0.3% by mass or more from the viewpoint of improving the ejection stability, and is preferably 2% by mass or less, more preferably 1.5% by mass or less from the viewpoint of improving the storage stability. That is, the percentage of the acetylene surfactant in the aqueous inkjet ink composition of the present invention is preferably 0.1% by mass or more and 2% by mass or less, more preferably 0.3% by mass or more and 1.5% by mass or less from the viewpoint of improving the ejection stability and the viewpoint of improving the storage stability.

The percentage of the nonionic surfactant in the aqueous inkjet ink composition of the present invention is preferably 0.05% by mass or more, more preferably 0.1% by mass or more from the viewpoint of improving the ejection stability, and is preferably 3% by mass or less, more preferably 2% by mass or less from the viewpoint of improving the storage stability. That is, the percentage of the nonionic surfactant in the aqueous inkjet ink composition of the present invention is preferably 0.05% by mass or more and 3% by mass or less, more preferably 0.1% by mass or more and 2% by mass or less from the viewpoint of improving the ejection stability and the viewpoint of improving the storage stability. Furthermore, the percentage of the total amount of the acetylene surfactant and the nonionic surfactant in the aqueous inkjet ink composition of the present invention is preferably 4% by mass or less, more preferably 3% by mass or less from the viewpoint of improving the storage stability and adjusting the static surface tension to an appropriate range.

The percentage of the water-soluble solvent in the aqueous inkjet ink composition of the present invention is preferably 15% by mass or more, more preferably 20% by mass or more from the viewpoint of improving the ejection stability, and is preferably 60% by mass or less, more preferably 50% by mass or less from the viewpoint of improving the drying property of the coating film. That is, the percentage of the water-soluble solvent in the aqueous inkjet ink composition of the present invention is preferably 15% by mass or more and 60% by mass or less, more preferably 20% by mass or more and 50% by mass or less from the viewpoint of improving the ejection stability and the viewpoint of improving the drying property of the coating film.

The percentage of the water (including water contained in each component) in the aqueous inkjet ink composition of the present invention is preferably 40% by mass or more, more preferably 50% by mass or more from the viewpoint of improving the drying property of the coating film, and is preferably 70% by mass or less, more preferably 60% by mass or less from the viewpoint of improving the ejection stability. That is, the percentage of the water (including water contained in each component) in the aqueous inkjet ink composition of the present invention is preferably 40% by mass or more and 70% by mass or less, more preferably 50% by mass or more and 60% by mass or less from the viewpoint of improving the drying property of the coating film and the viewpoint of improving the ejection stability.

### <Basic compound>

The aqueous inkjet ink composition of the present invention preferably contains a basic compound from the viewpoint of dissolving the alkali-soluble resin. Examples of the basic compound include inorganic basic compounds such as sodium hydroxide and potassium hydroxide; and organic basic compounds such as ammonia, methylamine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, and N-ethylmorpholine. The basic compounds can be used singly or in combination of two or more kinds thereof.

The percentage of the basic compound in the aqueous inkjet ink composition of the present invention can be an amount at which the alkali-soluble resin can be dissolved in a medium. The percentage is usually preferably 0.05% by mass or more, more preferably 0.1% by mass or more from the viewpoint of increasing the dispersion stability of the alkali-soluble resin, and is preferably 1% by mass or less, more preferably 0.5% by mass or less from the viewpoint of increasing the water resistance of a printed matter. That is, the percentage of the basic compound in the aqueous inkjet ink composition of the present invention is preferably 0.05% by mass or more and 1% by mass or less, more preferably 0.1% by mass or more and 0.5% by mass or less from the viewpoint of increasing the dispersion stability of the alkali-soluble resin and the viewpoint of increasing the water resistance of a printed matter.

Additives such as a known resin, surfactants other than those described above such as an anionic surfactant and a silicone surfactant, a wax emulsion, a pigment dispersant, a mildewproofing agent, a rust inhibitor, a thickener, an antioxidant, an ultraviolet absorber, a preservability improver, an antifoaming agent, and a pH adjuster can be further added to the aqueous inkjet ink composition of the present invention depending on the purpose. However, from the viewpoint of the recoating property of the ink, the aqueous inkjet ink composition of the present invention preferably does not contain a fluorine surfactant.

In the aqueous inkjet ink composition of the present invention, the static surface tension measured at 23°C is 27 mN/m or more and 33 mN/m or less, and the dynamic surface tension measured at 23°C by maximum bubble pressure method is 33 mN/m or more and 39 mN/m or less at a life time of 10 msec. When the static surface tension is less than 27 mN/m and more than 33 mN/m, the meniscus becomes unstable, or the ink supply becomes insufficient on the nozzle surface, and the ejection stability and the continuous ejection property may become poor. Similarly, when the dynamic surface tension is less than 33 mN/m and more than 39 mN/m, the meniscus becomes unstable, or the ink supply becomes insufficient on the nozzle surface, and the ejection stability and the continuous ejection property may become poor.

### <Method for preparing aqueous inkjet ink composition>

The method for preparing (producing) the aqueous inkjet ink composition of the present invention is not particularly limited, and the above-mentioned components can be added in order or simultaneously and mixed. Examples thereof include method 1) in which an aqueous resin varnish in which an alkali-soluble resin is dissolved in water in the presence of the basic compound, a pigment, and if necessary, a pigment dispersant and the like are mixed, then a pigment dispersion (ink base) is prepared using various dispersers such as a ball mill, an attritor, a roll mill, a sand mill, and an agitator mill, and the remaining materials are further added to prepare an aqueous inkjet ink composition; and method (2) in which a pigment is dispersed by the above-mentioned method, then a resin-coated pigment in which an alkali-soluble resin is deposited on a pigment surface is obtained by, for example, an acid deposition method or an ion exchange method described in Republished patent WO 2005/116147, then the obtained resin-coated pigment is neutralized with a basic compound and redispersed in water using various dispersers (such as a high-speed stirrer), and the remaining materials are further added to prepare an aqueous inkjet ink composition.

The initial viscosity of the aqueous inkjet ink composition of the present invention after production is 2.0 to 15.0 mPa·s, preferably in a range of 3.0 to 12.0 mPa·s. The viscosity can be measured with, for example, an E-type viscometer (trade name "RE100L type viscometer" manufactured by Toki Sangyo Co., Ltd.).

### <Printed matter>

The printed matter of the present invention is obtained by performing printing using the aqueous inkjet ink composition. Specifically, the printed matter of the present invention is obtained by applying (printing) the aqueous inkjet ink composition onto a base material using an inkjet printer.

Examples of the base material include non-absorbent print media such as coated paper such as art paper, inkjet dedicated paper, and inkjet glossy paper, and plastic base materials such as a polypropylene film and a polyvinyl chloride sheet; uncoated paper such as plain paper and offset paper; and a fabric of, for example, cotton. In particular, the aqueous inkjet ink composition of the present invention is suitable for a non-absorbent printing medium.

### <Inkjet printing method>

As the inkjet printing method of the present invention, conventionally known conditions can be appropriately adopted. Examples thereof include a method in which inkjet printing is performed by housing the aqueous inkjet ink composition in an ink cartridge, attaching the ink cartridge to an inkjet recording apparatus of, for example, a single pass system, and ejecting the aqueous inkjet ink composition from a nozzle to a base material.

### EXAMPLES

Hereinafter, the present invention will be described with reference to Examples and the like, but the present invention is not limited thereto.

### <Preparation of aqueous resin varnish>

In a mixed solution of 4.9 parts by mass of potassium hydroxide and 70.1 parts by mass of water, 25 parts by mass of acrylic acid/stearyl acrylate/styrene copolymer (alkali-soluble resins (1) to (5)) shown in Table 1 was dissolved to obtain aqueous resin varnishes (1) to (5) having a solid content of 25% by mass.

**[Table 1]**

| | | Acid value (mgKOH/g) | Tg (°C) | Mw |
|---|---|---|---|---|
| Aqueous resin varnish (1) | Alkali-soluble resin (1) | 180 | 50 | 30,000 |
| Aqueous resin varnish (2) | Alkali-soluble resin (2) | 100 | 35 | 30,000 |
| Aqueous resin varnish (3) | Alkali-soluble resin (3) | 230 | 60 | 30,000 |
| Aqueous resin varnish (4) | Alkali-soluble resin (4) | 80 | 35 | 30,000 |
| Aqueous resin varnish (5) | Alkali-soluble resin (5) | 300 | 75 | 30,000 |

### <Production Example 1>

### <Production of pigment dispersion (black ink base)>

48 parts by mass of water was added to and mixed with 32 parts by mass of the aqueous resin varnish (1) to prepare a resin varnish for pigment dispersion. To this resin varnish for pigment dispersion, 20 parts by mass of carbon black (trade name: "Printex 90", manufactured by Degussa AG) was further added, and the mixture was stirred and mixed, and then milled with a wet circulation mill to produce a black ink base (1) (pigment concentration: 20% by mass).

### <Production Examples 2 to 3>

A black ink base (2) and a black ink base (3) (both having a pigment concentration of 20% by mass) were produced in the same method as in Production Example 1 except that the aqueous resin varnish (2) or the aqueous resin varnish (3) was used instead of the aqueous resin varnish (1).

### <Production Examples 4 to 6>

### <Production of pigment dispersions (yellow, magenta, and cyan ink bases) >

A yellow ink base of Production Example 4, a magenta ink base of Production Example 5, and a cyan ink base of Production Example 6 (all having a pigment concentration of 20% by mass) were produced in the same method as in Production Example 1 except that a yellow pigment (trade name: Novoperm Yellow 4G01, manufactured by Clariant), a magenta pigment (trade name: "Inkjet magenta E5B02", manufactured by Clariant), or a cyan pigment (trade name: Heliogen Blue L 7101 F, manufactured by BASF SE) was used instead of the carbon black (trade name: "Printex 90", manufactured by Degussa AG).

### <Production Example 7>

### <Production of pigment dispersion (white ink base)>

28 parts by mass of water was added to and mixed with 32 parts by mass of the aqueous resin varnish (1) to prepare a resin varnish for pigment dispersion. To this resin varnish for pigment dispersion, 40 parts by mass of titanium oxide (trade name: "CR-960", manufactured by DuPont) was further added. The mixture was stirred and mixed, and then milled with a wet circulation mill to produce a white ink base (having a pigment concentration of 40% by mass).

### <Comparative Production Examples 1 to 2>

A black ink base (4) and a black ink base (5) (both having a pigment concentration of 20% by mass) were produced in the same method as in Production Example 1 except that the aqueous resin varnish (4) or the aqueous resin varnish (5) was used instead of the aqueous resin varnish (1).

### <Example 1>

### <Production of aqueous inkjet ink composition>

The black ink base (1), propylene glycol as a water-soluble solvent, an acetylene surfactant (trade name: SURFYNOL 465, manufactured by Nissin Chemical co., ltd.) as an acetylene surfactant, an alkoxy alcohol (alcohol alkoxylate surfactant, trade name "DYNWET 800", manufactured by BYK) as a nonionic surfactant, a polyethylene resin emulsion (trade name: AQUACER531, manufactured by BYK) as a resin emulsion, and water were stirred and mixed so as to have the mass ratio in Table 2, thereby the aqueous inkjet ink composition of Example 1 was produced.

### <Examples 2 to 26 and Comparative Examples 1 to 11>

### <Production of aqueous inkjet ink composition>

The aqueous inkjet ink compositions of Examples and Comparative Examples were produced in the same method as in Example 1 except that the raw materials used and the amounts thereof were changed as shown in Table 2 to 4 in Examples and Comparative Examples.

### <Measurement of dynamic surface tension (mN/m)>

The dynamic surface tension (mN/m) at a life time of 10 msec at 23°C of each aqueous inkjet ink composition of the Examples and Comparative Examples was measured using a dynamic surface tensiometer (trade name "BUBLE PRESSURE TENSIOMETER BP 100", manufactured by KRUSS GmbH) utilizing a maximum bubble pressure method.

### <Measurement of static surface tension (mN/m)>

The static surface tension (mN/m) at 23°C of each aqueous inkjet ink composition of the Examples and Comparative Examples was measured using an automatic surface tensiometer (trade name: CBVP-A3, manufactured by Kyowa Interface Science Co., Ltd.) utilizing Wilhelmy method and a platinum plate.

### <Evaluation of aqueous inkjet ink composition>

Evaluation was performed by the following method, and the results are shown in Tables 2 to 4. In the following evaluation, an ink composition having at least one 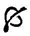 is determined to be unacceptable.

### <Storage stability>

Each aqueous inkjet ink composition produced above was placed in a glass bottle, and the viscosity at 25°C was measured using a viscometer ("RE100 L type" manufactured by TOKISANGYO) . Then, the glass bottle was tightly stopped and stored at 60°C for 1 month, and the viscosity (25°C) after storage was measured with a viscometer. The stability over time was evaluated by the rate of viscosity change (60°C, viscosity after 1 month - viscosity before storage/viscosity before storage).

### [Evaluation criteria]

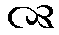 : Rate of viscosity change is less than 5%.
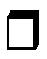 : Rate of viscosity change is 5% or more and less than 10%.
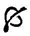 : Rate of viscosity change is 10% or more.

### <Ejection stability>

Each aqueous inkjet ink composition produced above was packed in a cartridge of a printer PX105 manufactured by Seiko Epson Corp., printing was performed on photographic paper GL-101A450 (manufactured by Canon Inc.) except for the white ink, and printing was performed on shielding paper for the white ink to evaluate the ejection stability.

### [Evaluation criteria] 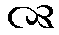

: There is no printing disorder, and ejection can be stably performed.
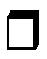 : There is some printing disorder, but ejection can be performed.
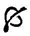 : There is printing disorder, and ejection cannot be stably performed.

### <Continuous ejection property>

Each aqueous inkjet ink composition produced above was packed in a cartridge of a printer PX105 manufactured by Seiko Epson Corp., and 50 sheets of a solid image of 15 cm × 20 cm were continuously printed on photographic paper GL-101A450 (manufactured by Canon Inc.) except for the white ink and shielding paper for the white ink to evaluate continuous ejection property.

### [Evaluation criteria] 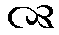

: Image quality is good, and ejection can be stably performed.
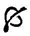 : Image quality degradation such as streaks is observed, and ejection cannot be stably performed.

### <Rubfastness>

Each printed matter produced in the evaluation of the continuous ejection property on which the solid image was printed was dried in an oven at 80°C for 3 minutes, and then the printed surface was rubbed with a cotton swab to evaluate the rubfastness.

### [Evaluation criteria] 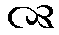

: Even after the coating film was rubbed 10 times with a cotton swab, blurring did not occur at all.
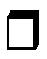 : After the coating film surface was rubbed 10 times with a cotton swab, the color was transferred to the cotton swab, and the rubbed part was slightly blurred.
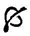 : After the coating film surface was rubbed 10 times with a cotton swab, the rubbed part was completely peeled off.

**[Table 2]**

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Pigment dispersion | Alkali-soluble resin (1) | Aqueous black ink base (1) | 25 | - | - | - | - | - | - | 25 | 25 | 25 | 25 | 25 |
| | Alkali-soluble resin (2) | Aqueous black ink base (2) | - | 25 | - | - | - | - | - | - | - | - | - | - |
| | Alkali-soluble resin (3) | Aqueous black ink base (3) | - | - | 25 | - | - | - | - | - | - | - | - | - |
| | Alkali-soluble resin (1) | Aqueous cyan ink base | - | - | - | 15 | - | - | - | - | - | - | - | - |
| | Alkali-soluble resin (1) | Aqueous magenta ink base | - | - | - | - | 25 | - | - | - | - | - | - | - |
| | Alkali-soluble resin (1) | Aqueous yellow ink base | - | - | - | - | - | 25 | - | - | - | - | - | - |
| | Alkali-soluble resin (1) | Aqueous white ink base | - | - | - | - | - | - | 25 | - | - | - | - | - |
| Water-soluble solvent | | Propylene glycol | 35 | 35 | 35 | 40 | 35 | 35 | 35 | - | 35 | 35 | 35 | 35 |
| | | Glycerin | - | - | - | - | - | - | - | 28 | - | - | - | - |
| | Polyethylene | AQUACER 531 | 1 | 1 | 1 | 1 | 1 | 1 | 1 | 1 | - | - | - | - |
| | Acrylic resin | YODOSOL AD173 | - | - | - | - | - | - | - | - | 1 | - | - | - |
| | Styrene-acrylic resin | NeoCryl A-1092 | - | - | - | - | - | - | - | - | - | 1 | - | - |
| | Vinyl acetate-acrylic resin | VINYBLAN 1245 L | - | - | - | - | - | - | - | - | - | - | 1 | - |
| Resin emulsion (solid content) | Vinyl chloride-acrylic resin | VINYBLAN 278 | - | - | - | - | - | - | - | - | - | - | - | 1 |
| | Vinyl acetate resin | VINYBLAN GV6181 | - | - | - | - | - | - | - | - | - | - | - | - |
| | Polyester urethane | SuperFlex 740 | - | - | - | - | - | - | - | - | - | - | - | - |
| | Polyether urethane | NeoRez R-966 | - | - | - | - | - | - | - | - | - | - | - | - |
| | Polycarbonate urethane | SuperFlex 420NS | - | - | - | - | - | - | - | - | - | - | - | - |
| | Polyester | SEPOLSION ES | - | - | - | - | - | - | - | - | - | - | - | - |
| Surfactant (solid content) | Acetylene surfactant | SURFYNOL 465 | 0.5 | 0.5 | 0.5 | 0.5 | 0.5 | 0.5 | 0.5 | 0.5 | 0.5 | 0.5 | 0.5 | 0.5 |
| | | SURFYNOL 440 | - | - | - | - | - | - | - | - | - | - | - | - |
| | Nonionic surfactant | DYNWET 800 | 0.5 | 0.5 | 0.5 | 0.5 | 0.5 | 0.5 | 0.5 | 0.5 | 0.5 | 0.5 | 0.5 | 0.5 |
| | | EMULGEN 705 | - | - | - | - | - | - | - | - | - | - | - | - |
| | Silicone surfactant | TEGO Glide 450 | - | - | - | - | - | - | - | - | - | - | - | - |
| | Anionic surfactant | Persoft EF | - | - | - | - | - | - | - | - | - | - | - | - |
| Water | | | 38 | 38 | 38 | 43 | 38 | 38 | 38 | 45 | 38 | 38 | 38 | 38 |
| Total | | | 100 | 100 | 100 | 100 | 100 | 100 | 100 | 100 | 100 | 100 | 100 | 100 |
| Dynamic surface tension (mN/m) | | | 37 | 36.8 | 37.3 | 37.5 | 36.8 | 38 | 37.2 | 38.1 | 36.7 | 36.8 | 37.5 | 37.2 |
| Static surface tension (mN/m) | | | 31 | 31.1 | 31.5 | 31.1 | 31.1 | 31.2 | 31 | 32.2 | 31.5 | 31.3 | 31.3 | 31.1 |
| Evaluation | | Storage stability | 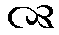 | 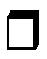 | 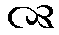 | 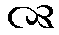 | 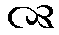 | 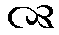 | 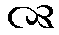 | 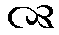 | 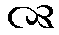 | 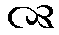 | 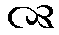 | 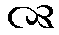 |
| | | Ejection stability | 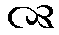 | 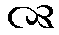 | 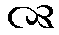 | 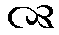 | 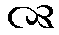 | 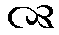 | 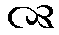 | 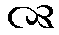 | 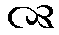 | 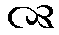 | 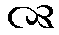 | 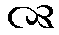 |
| | | Continuous ejection property | 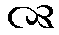 | 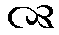 | 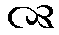 | 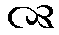 | 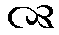 | 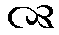 | 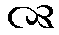 | 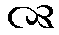 | 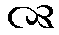 | 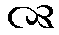 | 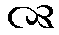 | 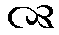 |
| | | Rubfastness | 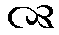 | 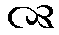 | 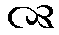 | 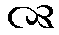 | 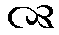 | 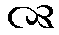 | 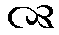 | 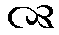 | 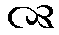 | 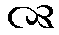 | 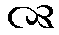 | 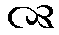 |

**[Table 3]**

| | | | Exa mple | | | | | | | | | | | | | |
|---|---|---|---|---|---|---|---|---|---|---|---|---|---|---|---|---|
| | | | 13 | 14 | 15 | 16 | 17 | 18 | 19 | 20 | 21 | 22 | 23 | 24 | 25 | 26 |
| Pigment dispersion | Alkali-soluble resin (1) | Aqueous black ink base (1) | 25 | 25 | 25 | 25 | 25 | 25 | 25 | 25 | 25 | 25 | 25 | 25 | 25 | 25 |
| | Alkali-soluble resin (2) | Aqueous black ink base (2) | - | - | - | - | - | - | - | - | - | - | - | - | - | - |
| | Alkali-soluble resin (3) | Aqueous black ink base (3) | - | - | - | - | - | - | - | - | - | - | - | - | - | - |
| | Alkali-soluble resin (1) | Aqueous cyan ink base | - | - | - | - | - | - | - | - | - | - | - | - | - | - |
| | Alkali-soluble resin (1) | Aqueous magenta ink base | - | - | - | - | - | - | - | - | - | - | - | - | - | - |
| | Alkali-soluble resin (1) | Aqueous yellow ink base | - | - | - | - | - | - | - | - | - | - | - | - | - | - |
| | Alkali-soluble resin (1) | Aqueous white ink base | - | - | - | - | - | - | - | - | - | - | - | - | - | - |
| Water-soluble solvent | | Propylene glycol | 35 | 35 | 35 | 35 | 35 | 35 | 35 | 35 | 35 | 35 | 35 | 35 | 35 | 32 |
| | | Glycerin | - | - | - | - | - | - | - | - | - | - | - | - | - | - |
| | Polyethylene | AQUACER 531 | - | - | - | - | - | 0.5 | 10 | 1 | 1 | 1 | 1 | 1 | 1 | 1 |
| | Acrylic resin | YODOSOL AD173 | - | - | - | - | - | - | - | 1 | - | - | - | - | - | - |
| | Styrene-acrylic resin | NeoCryl A-1092 | - | - | - | - | - | - | - | - | - | - | - | - | - | - |
| | Vinyl acetate-acrylic resin | VINYBLAN 1245 L | - | - | - | - | - | - | - | - | - | - | - | - | - | - |
| Resin emulsion (solid content) | Vinyl chloride-acrylic resin | VINYBLAN 278 | - | - | - | - | - | - | - | - | - | - | - | - | - | - |
| | Vinyl acetate resin | VINYBLAN GV6181 | 1 | - | - | - | - | - | - | - | - | - | - | - | - | - |
| | Polyester urethane | SuperFlex 740 | - | 1 | - | - | - | - | - | - | - | - | - | - | - | - |
| | Polyether urethane | NeoRez R-966 | - | - | 1 | - | - | - | - | - | - | - | - | - | - | - |
| | Polycarbonate urethane | SuperFlex 420NS | - | - | - | 1 | - | - | - | - | - | - | - | - | - | - |
| | Polyester | SEPOLSION ES | - | - | - | - | 1 | - | - | - | - | - | - | - | - | - |
| Surfactant (solid content) | Acetylene surfactant | SURFYNOL 465 | 0.5 | 0.5 | 0.5 | 0.5 | 0.5 | 0.5 | 0.5 | 0.5 | - | 0.5 | 0.5 | 0.5 | 0.1 | 1 |
| | | SURFYNOL 440 | - | - | - | - | - | - | - | - | 0.5 | - | - | - | - | - |
| | Nonionic surfactant | DYNWET 800 | 0.5 | 0.5 | 0.5 | 0.5 | 0.5 | 0.5 | 0.5 | 0.5 | 0.5 | - | 0.5 | 0.5 | 0.1 | 2 |
| | | EMULGEN 705 | - | - | - | - | - | - | - | - | - | 0.5 | - | - | - | - |
| | Silicone surfactant | TEGO Glide 450 | - | - | - | - | - | - | - | - | - | - | 0.1 | - | - | - |
| | Anionic surfactant | Persoft EF | - | - | - | - | - | - | - | - | - | - | - | 0.4 | - | - |
| Water | | | 38 | 38 | 38 | 38 | 38 | 38.5 | 29 | 37 | 38 | 38 | 37.9 | 37.6 | 38.8 | 39 |
| Total | | | 100 | 100 | 100 | 100 | 100 | 100 | 100 | 100 | 100 | 100 | 100 | 100 | 100 | 100 |
| Dynamic surface tension (mN/m) | | | 36.9 | 37.1 | 36.8 | 37.5 | 37.2 | 36.5 | 38.8 | 38.5 | 38.6 | 33.7 | 38.5 | 36.5 | 38.7 | 33.5 |
| Static surface tension (mN/m) | | | 30.7 | 31 | 31.3 | 31 | 30.8 | 30.6 | 32.8 | 32.2 | 31.2 | 29.1 | 30.9 | 30.6 | 32.8 | 27.2 |
| Evaluation | | Storage stability | 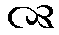 | 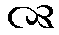 | 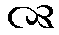 | 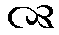 | 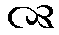 | 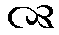 | 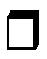 | 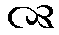 | 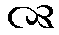 | 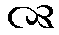 | 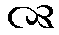 | 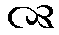 | 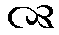 | 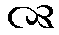 |
| | | Ejection stability | 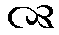 | 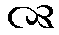 | 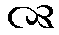 | 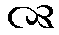 | 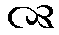 | 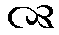 | 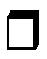 | 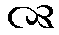 | 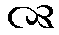 | 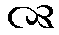 | 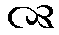 | 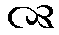 | 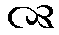 | 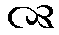 |
| | | Continuous ejection property | 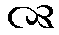 | 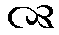 | 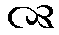 | 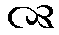 | 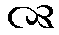 | 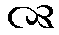 | 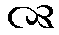 | 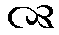 | 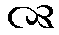 | 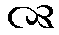 | 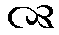 | 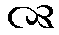 | 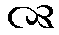 | 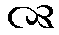 |
| | | Rubfastness | 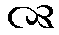 | 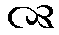 | 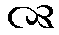 | 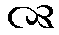 | 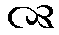 | 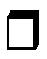 | 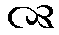 | 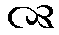 | 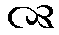 | 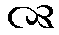 | 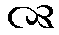 | 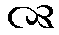 | 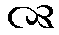 | 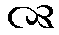 |

**[Table 4]**

| | | | Comparative Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Pigment dispersion | Alkali-soluble resin (1) | Aqueous black ink base (1) | 25 | - | - | 25 | 25 | 25 | 25 | 25 | 25 | 25 | 25 |
| | Alkali-soluble resin (4) | Aqueous black ink base (4) | - | 25 | - | - | - | - | - | - | - | - | - |
| | Alkali-soluble resin (5) | Aqueous black ink base (5) | - | - | 25 | - | - | - | - | - | - | - | - |
| Water-soluble solvent | | Propylene glycol | 35 | 35 | 35 | 35 | 35 | 20 | 35 | 35 | 35 | 35 | 32 |
| Resin emulsion (solid content) | Polyethylene | AQUACER 531 | - | 1 | 1 | 1 | 0.1 | 15 | 1 | 1 | 1 | 1 | 1 |
| Surfactant (solid content) | Acetylene surfactant | SURFYNOL 465 | 0.5 | 0.5 | 0.5 | - | 0.5 | 1 | 0.5 | - | - | - | 2 |
| | Nonionic surfactant | DYNWET 800 | 0.5 | 0.5 | 0.5 | - | 0.5 | 2 | - | 0.5 | - | - | 3 |
| | Silicone surfactant | TEGO TWIN 4100 | - | - | - | - | - | - | - | - | 0.5 | - | - |
| | | TEGO Glide 450 | - | - | - | - | - | - | - | - | - | 0.5 | - |
| Water | | | 39 | 38 | 38 | 39 | 38.9 | 37 | 38.5 | 38.5 | 38.5 | 38.5 | 37 |
| Total | | | 100 | 100 | 100 | 100 | 100 | 100 | 100 | 100 | 100 | 100 | 100 |
| Dynamic surface tension (mN/m) | | | 36.9 | 37.1 | 37.3 | 46.5 | 37.3 | 37.6 | 39.7 | 40.2 | 33.4 | 42.8 | 33.5 |
| Static surface tension (mN/m) | | | 30.2 | 31 | 31.2 | 38.2 | 30.5 | 32.5 | 30.2 | 33.5 | 25.5 | 32 | 26.7 |
| Evaluation | | Storage stability | 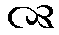 | 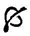 | 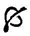 | 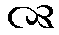 | 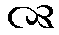 | 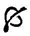 | 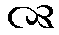 | 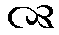 | 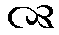 | 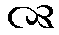 | 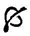 |
| | | Ejection stability | 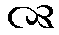 | 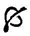 | 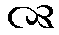 | 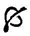 | 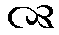 | 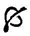 | 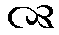 | 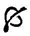 | 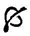 | 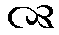 | 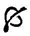 |
| | | Continuous ejection property | 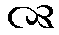 | 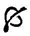 | 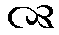 | 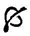 | 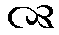 | 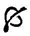 | 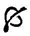 | 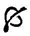 | 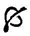 | 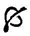 | 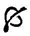 |
| | | Rubfastness | 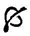 | - | 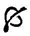 | - | 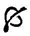 | - | - | - | - | - | - |

In Tables 2 to 4, as the resin emulsion,
AQUACER531 indicates a polyethylene resin emulsion (manufactured by BYK);
YODOSOL AD173 indicates an acrylic resin emulsion (manufactured by Henkel AG & Co. KGaA);
NeoCryl A-1092 indicates a styrene-acrylic resin emulsion (manufactured by Covestro AG);
VINYBLAN 1245 L indicates a vinyl acetate-acrylic resin emulsion (manufactured by Nissin Chemical co., ltd.);
VINYBLAN 278 indicates a vinyl chloride-acrylic resin emulsion (manufactured by Nissin Chemical co., ltd.);
VINYBLAN GV6181 indicates a vinyl acetate resin emulsion (manufactured by Nissin Chemical co., ltd.);
SuperFlex 740 indicates a polyester polyurethane resin emulsion (manufactured by DKS Co. Ltd.);
NeoRez R-966 indicates a polyether polyurethane resin emulsion (manufactured by Covestro AG);
SuperFlex 420 NS indicates a polycarbonate polyurethane resin emulsion (manufactured by DKS Co. Ltd.); and
SEPOLSION ES indicates a polyester resin emulsion (manufactured by Sumitomo Seika Chemicals Company, Limited).

In Tables 2 to 4,
SURFYNOL 465 indicates an acetylene surfactant (manufactured by Nissin Chemical co., ltd.);
SURFYNOL 440 indicates an acetylene surfactant (manufactured by Nissin Chemical co., ltd.);
DYNWET 800 indicates an alkoxy alcohol (alcohol alkoxylate surfactant, manufactured by BYK);
EMULGEN 705 indicates a polyoxyethylene alkyl ether (manufactured by Kao Corporation);
TEGO Glide450 indicates a silicone surfactant (manufactured by Evonik);
Persoft EF indicates an anionic surfactant (manufactured by NOF CORPORATION); and
TEGO TWIN4100 indicates a silicone surfactant (manufactured by Evonik).

## Claims

1. An aqueous inkjet ink composition, comprising: a pigment, an alkali-soluble resin, a resin emulsion, a surfactant, a water-soluble solvent, and water,
wherein the alkali-soluble resin has an acid value of 100 mgKOH/g or more and 250 mgKOH/g or less,
the surfactant contains an acetylene surfactant and a nonionic surfactant,
the nonionic surfactant contains one or more selected from the group consisting of a polyoxyethylene alkyl ether and an alkoxy alcohol,
a percentage of a resin component of the resin emulsion is 0.5% by mass or more and 10% by mass or less in the aqueous inkjet ink composition,
a static surface tension measured at 23°C is 27 mN/m or more and 33 mN/m or less, and
a dynamic surface tension measured at 23°C by maximum bubble pressure method is 33 mN/m or more and 39 mN/m or less at a life time of 10 msec.

2. The aqueous inkjet ink composition according to claim 1, wherein the polyoxyethylene alkyl ether has an alkyl group having 11 or more and 15 or less carbon atoms.

3. The aqueous inkjet ink composition according to claim 1 or 2, which does not comprise a fluorine surfactant.

4. A printed matter obtained by performing printing using the aqueous inkjet ink composition according to any one of claims 1 to 3 on a base material.

5. The printed matter according to claim 4, wherein the base material is a non-absorbent print medium.
